# EUROPEAN PATENT APPLICATION

(11) **EP 4 603 332 A1**
(43) Date of publication of application: **20.08.2025**
(21) Application number: 24157478.9
(22) Date of filing: 13.02.2024
(51) Int. Cl.: B60Q 1/24, E05F 15/40, G01S 17/10, G01S 17/931, B60Q 1/30, B60Q 1/44, B60Q 1/56

(54) **METHOD FOR DYNAMIC CONTROL OF A VEHICLE'S HATCH, COMPUTER ELEMENT, COMPUTER PROGRAM AND LIGHTING SYSTEM FOR IMPLEMENTING THE METHOD**

(71) Applicant: VALEO VISION, 93012 Bobigny Cedex (FR)
(72) Inventor: PIQUARD, Geoffrey, 93012 Bobigny Cedex (FR); GOURDON, Matheo, 93012 Bobigny Cedex (FR); RENAUD, Pierre, 93012 Bobigny Cedex (FR); BEDDAR, Sidahmed, 93012 Bobigny Cedex (FR); MIMOUN, Mickael, 93012 Bobigny Cedex (FR)
(74) Representative: Valeo Visibility

(57) **Abstract**

The present invention concerns a method, a computer element, a computer program, a lighting system and a vehicle including such system comprising, on the one hand, a plurality of lighting devices (5) controlled by a control unit (2) comprising processing means to provide a plurality of lighting configurations of said system (1) projecting light in a lighting field and, on the other hand, a plurality of luminous sensor (3) configured to acquire a portion of a reflection of said projected light within a sensing field, said control unit (2) being further configured to receive data from the luminous sensors for acquiring data on the external environment of the vehicle, the method being characterized in that it is implemented by said control unit (2) and comprises, during the opening or closing of the hatch of said vehicle :
- Monitoring the activation and speed of pivoting of the motorized hatch of the vehicle,
- Projecting light by at least one first lighting device (5) among the license plate light, the main stop light, the third (central)
- Monitoring the opening of the hatch by calculating at least one distance between at least one first sensor and the hatch and/or an obstacle in the pivoting range of the hatch,
and
- controlling the motorized hatch to avoid collision.

## Description

The present invention is related to the field of lighting (and/or signaling) devices for vehicles, in particular for motorized vehicles such as automotives, equipped with automatic/motorized hatch. The invention relates more particularly to provide a control of the hatch (trunk or boot or hatchback) of a vehicle, for assistance to users (i.e., the driver or a person inside or outside the vehicle) and avoiding collisions of the hatch with an obstacle.

Indeed, automatic hatches can cause problems of collision if no detection of obstacle is performed during the opening or closing. Some known solution detects the force exerted on the hatch and stop the mechanisms when the force is too strong. These solutions present the drawback that the hatch may still have been damaged depending on the nature of the obstacle reached. Other solutions use dedicated sensing devices such as acoustic (ultrasound) or infra-red devices or cameras, but they present an increase of cost and may not be reliable enough in all conditions. For example, in some cases, when the sensing area is too wide or the ambient light is too low or too high, etc., cameras may not be adequate for an accurate detection.

The present invention aims at overcoming at least some drawbacks of the priori by providing solutions for managing vehicle lighting and optimizing the assistance to users, preferably while limiting the increase of cost and/or energy consumption and while complying with regulations.

This purpose is reached by a method defined in independent claim 1.

Les revendications dépendantes présentent d'autres caractéristiques et particularités avantageuses de l'invention.

Other features and advantages of the present invention will appear more clearly on reading the description of various embodiments below, made with reference to the appended drawings. Indeed, to complete the description and to allow a better understanding of the invention, a set of drawings is provided. These drawings illustrate one embodiment of the invention and form an integral part of the description, which should not be construed as limiting the scope of the invention, but merely as an example of how the invention may be carried out. The drawings include the following figures:

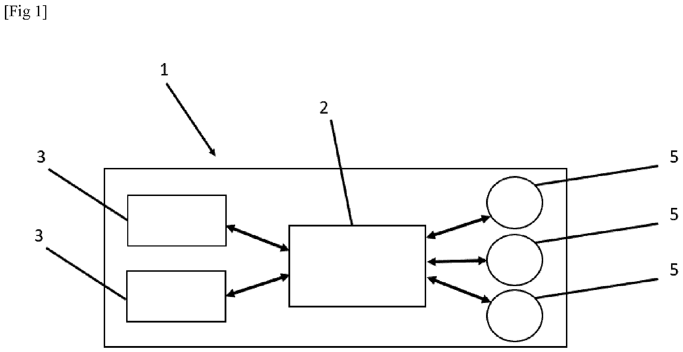

[Fig 1] Figure 1 shows a schematic view of a lighting system of a vehicle according to some embodiments ;

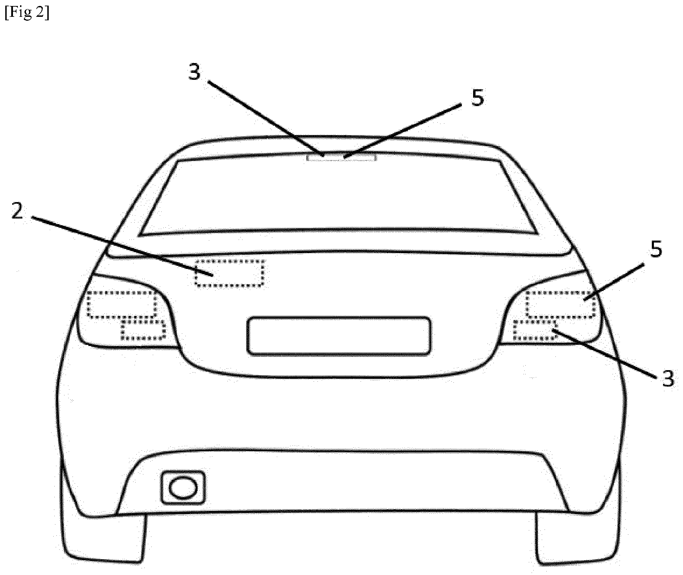

[Fig 2] Figure 2 shows rear view of a vehicle and its lighting and sensing devices according to some embodiments ;
[Fig 3] Figure 3 shows a schematic side view of a vehicle, during the opening of its hatch and with its lighting and sensing devices according to some embodiments,
[Fig 4] Figure 4 shows a schematic side view of a vehicle, during the opening of its hatch and with its lighting and sensing devices according to some other embodiments.

The present invention takes advantages of LiDAR type technology, which has been developed by using the visible light, so that the reflection of light emitted by the lighting system of vehicles can be used by sensor for enabling detection in the environment of the vehicle. This technology generally uses the blue wavelength (410-490nm) for the ease of discrimination from the natural light (from the sun), because lighting systems of vehicles generally emit light with a peak in the blue wavelength, but the main advantage is that the lighting system of the vehicle is used for sensing. The same device which may be used for lighting functions (such as a Low Beam LB, a High Beam HB, a Daytime Running Light DRL, a Position Light PL, a Stop Light, a Reverse Light, a Corner Light CL, or a Turn Indicator TI, third stop light, license plate's light, etc.), may also be used for detection of objects. The term "luminous sensors" here designates the sensor as a whole, which generally comprises a photodiode (a semiconductor component having the capacity to capture radiation from the optical domain and transform it into an electrical signal), generally behind an optical system for light transmission and/or filtering. Such sensor transmits the electrical signal to the control unit, possibly through a dedicated microchip which can be implemented within the sensor itself. The term "Lidar" is thus used in the present application to refer to this technology using the visible light emitted by the lighting system of vehicle (instead of requiring additional emitting devices). This technology has been used on many different ways, in field of the present application, for example as disclosed in patent applications EP4201740, EP4201741, EP4202496, EP4202503, EP4202495, EP4202384 and WO202330817. These applications teach the use of several light emitters (lighting devices) having different parameters such as the frequency (of signal), the wavelength, the wave shape, the angle of projection/reflection, the lenses and so on, with the signal being acquired by several respective sensors dedicated to these various parameters (with filters, angles of detection, lenses and so on). The present application uses this technology based on the light emitted by the lighting devices of a vehicle encoding a signal which is returned to sensors and analyzed by a processing unit (or "control unit") configured to compute various features, including for example the time of flight (ToF) of the signal encoded within the emitted light and to allow various functionalities such as obtaining information about the surrounding objects.

The present invention relates to a method for dynamic control of a motorized hatch, i.e., a motor connected to control the hatch of the vehicle, as well as a computer element, a computer program and a lighting system for implementing the method. This application refers to a control unit which controls the lighting, but which is also configured to control the lighting and sensing functions, for example by carrying out calculations, comparisons, and so one. Those skilled in the art will of course understand that it may be several control units for the different tasks and cooperating to implement the invention or a single unit carrying out all the tasks. Furthermore, those skilled in the art naturally understand, by the nature of the tasks carried out, that such a unit will generally include at least one processor executing instructions and that various forms of implementation are possible (with different electronic components) and that it is therefore not necessary to provide details on the types of materials usable or used. The drawings presented on the figure pages are provided solely by way of example and in a very schematic manner, so that those skilled in the art will be able to imagine any type of variants based on the content of the present application.

Unless otherwise defined, all terms (including technical and scientific terms) used in this document must be interpreted in accordance with professional practice, in particular in the field of lighting and signaling of motor vehicles, in particular automobiles. It is also understood that terms in common usage must be interpreted as being customary in the art concerned and not in an idealized or overly formal sense and must not be interpreted in a limiting manner, unless expressly defined as such in this document. Also, in the present application, as generally accepted in the field of patent applications, the terms "including", "include" and "includes" as well as their derivatives (such as "comprising", "comprises", etc.) should not be understood in an exclusionary sense, that is, these terms should not be interpreted as excluding the possibility that what is described or defined may include other elements, steps, etc.

The terms "lighting system" and "lighting device" are meant in the present application both for the lighting itself and for the signaling, including in particular:
devices that allow lighting the environment of the vehicle,
   - either to be able to see, for example the low beam headlights (LB, according to the English terminology), the corner lights (CL, according to the English terminology) or the high beam headlights (HB, according to the English terminology) even if the latter are generally prohibited in certain conditions, particularly in urban areas,
   - either to be able to be seen, such as position lights (PL, according to the Anglo-Saxon terminology "position light"), rear position lights (RPL, according to the English terminology "rear position light") or daytime running lights (DRL, according to the English terminology "day running light")
but also devices which make it possible to signal the actions of a driver to other users, such as for example brake lights (SL, according to the English terminology "stop light"), direction indicator lights (flashing or TI, according to the English terminology "turn indicator") or hazard lights (W, according to the English terminology "warning").

The lighting system (1) therefore comprises a plurality of lighting (or signaling) devices (5) which may be of the type of examples (PL, CL, LB, HB, DRL, SL, TI, W) provided above, which are neither exhaustive nor limiting. More specifically, since the present invention concerns the hatch (trunk or boot or hatchback), the most relevant lighting devices may include the light of the license plate and/or the main stop lights (one or both of the side stop lights) and/or the third stop light ("central" at the middle of the vehicle, below the roof) or even the rear light. Indeed, these lights can be used for parking, in particular when moving backward and the invention takes advantage of their presence and their use for the purpose of avoiding collision of the hatch. Therefore, there is no need for additional devices or sensors than those already present, but it may be chosen to have additional luminous sensor for a better integration of information depending on the conditions. In general, it will be considered that the system also includes the control (or processing) unit (2) which makes it possible to control the system (1) and implement the process. Each device may include one or more light source(s) depending on the type of lighting (incandescent bulbs or light-emitting diode (LED), for example). In addition, the luminous sensors (3) are considered as part of the lighting system, may the sensors be included in the headlamps or elsewhere. These considerations of the system including the control unit and sensors are thus not limiting the scope and those of skills in the art will appreciate the various ways to implement the invention for the present disclosure.

In some embodiments, at least one of the lighting devices comprises a matrix arrangement of light pixels in lines and columns. In certain particular cases, the matrix includes at least 2000 light sources in the solid state. A matrix arrangement is a typical example of this process. Lines can be grouped into projected distance intervals and each column in each group represents an angle interval. This angle value depends on the resolution of the matrix, which is generally between 0.01° per column and 0.5° per column. This control of rows and columns allows you to independently control the angle and range, in addition to the intensity and allows you to manage several light sources at the same time. In some of these embodiments, following one of said reductions, certain rows or columns are turned off compared to the initial light intensity. Indeed, modern lighting devices often include "solid state" light sources and the invention makes it possible to take advantage of this type of device which notably allows adaptation of photometry. The term "solid state" refers to the light emitted by solid-state electroluminescence, which uses semiconductors to convert electricity into light. Compared to incandescent lighting, solid-state lighting creates visible light with reduced heat production and less energy dissipation. The generally low mass of a solid-state electronic lighting device provides greater resistance to shock and vibration than brittle glass tubes/bulbs and long, thin filament wires. They also eliminate filament evaporation, which can increase the life of the lighting device. Some examples of these types of lighting include semiconductor light-emitting diodes (LEDs), organic light-emitting diodes (OLEDs), or polymer light-emitting diodes (PLEDs) as lighting sources rather than electrical filaments, plasma or the gas.

Some embodiments of the present invention concern a method for dynamic control of a vehicle's hatch, by a lighting system (1) comprising, on the one hand, a plurality of lighting devices (5) controlled by a control unit (2) comprising processing means to provide a plurality of lighting configurations of said system (1) projecting light in a lighting field and, on the other hand, a plurality of luminous sensor (3) configured to acquire a portion of a reflection of said projected light within a sensing field, said control unit (2) being further configured to receive data from the luminous sensors for acquiring data on the external environment of the vehicle. Such method, implemented by said control unit (2), comprises, during the opening or closing of the hatch of said vehicle:
- Monitoring the activation and speed of pivoting of the motorized hatch of the vehicle,
- Projecting light by at least one first lighting device (5) among the license plate light, the main stop light, the third (middle)
- Monitoring the opening of the hatch by calculating at least one distance between at least one first sensor and the hatch and/or an obstacle in the pivoting range of the hatch,
   and
- controlling the motorized hatch to avoid collision.

In some embodiments, when controlling the hatch, the control unit (2) controls speed of the motor connected to the hatch to slow and/or stop the opening and/or the closing and optionally controls at least one other device for emitting an alert, informing the users of a risk of collision. The unit control can slow down the speed of the opening to let the hatch open close to an obstacle and can stop the opening. Of course, the same applies for the closing of the hatch. In addition, the control unit can control atleast one electronic device such as a display, an indicator, a sound or the like, to emit an alert, for example by activating some of the lighting devices (for example the warnings) or the honk, for example with a specific sequence (repeated lights or sounds). The size and shape of the hatch and/or the range of its pivotal are known, such that the control unit (2) knows where obstacles will imply a risk of collision.

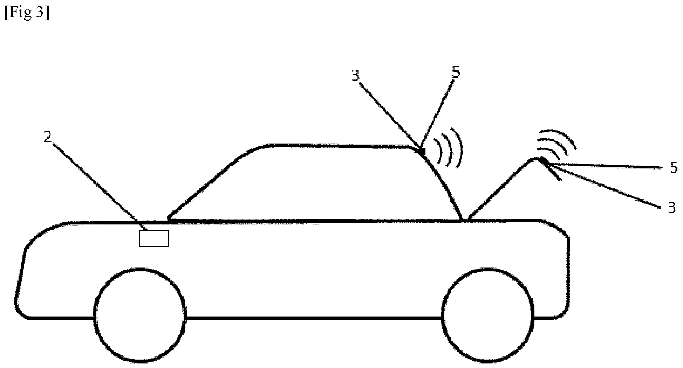

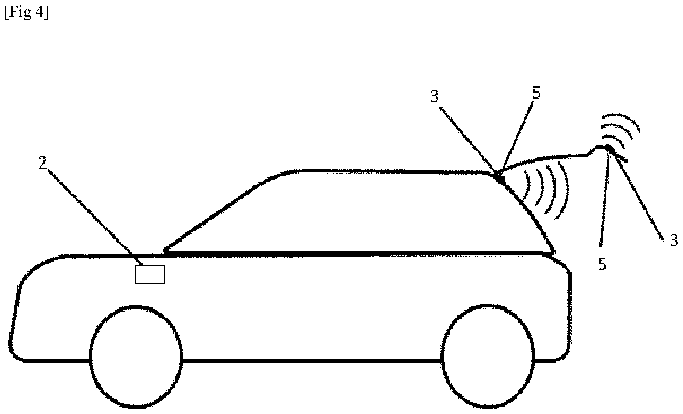

In some embodiments, controlling the hatch, the control unit (2) further controls a second lighting device, in combination with said first sensor or at least a second sensor at a different location, for improving the detection of obstacle and monitoring of the opening. In such embodiments, a correlation of the detection performed by several light sensor can provide better performance (with at least two sensors distributed at different locations) than with only one sensor. As illustrated in a non-limiting manner in figures 3 and 4, depending on the configuration of the hatch (impose by the shape of the car), the location of the sensor has an impact on the ability of the system to monitor the opening and/or closing without risks of collision. The use of two sensors at different location provides more security with a limited increase of cost and power consumption since the lighting devices are already present at several locations. Furthermore, the control unit benefits from two signals coming from two different locations and can better monitor the opening and/or closing by integrating both signals. It is of course possible to use more than two sensors but two are generally sufficient and thus preferred in these multi-sensors embodiments. Preferably, the two sensors will be located one on the hatch (on the pivoting part) and one on the vehicle (on the fixed part, for example at the third stop light), preferably with an overlap of their sensing field at least in some positions of the hatch. In such embodiments, it can be advantageous that the different sensors monitoring the hatch pertain to different "groups" (as defined below) so that their signal cannot interfere in any position of the trunk.

In some embodiments, the lighting devices (5) comprise groups of light sources and all the sources of the same group share a light feature, which is not shared by any other light source of a different group and wherein the first and second lighting devices pertain to different groups. Depending on the embodiments, this light feature is at least one feature among the frequency, the color and the wave shape. Such embodiments are more easily obtained by using lighting devices comprising solid-state light sources, preferably light emitting diodes or laser diodes. It is known from the technology of visible light sensing (also called flashing Lidar) that the lighting devices project light incorporating a signal (by a specific waveform of variation of intensity of the lighting: succession of on and off at high frequency) and that the sensors detect this signal at high frequency so that the control unit can compute a correlation between the emitted and received signals. The fact that various sensors will be distributed for the need of assistance and that the lighting pattern (or field) will be varied according to the invention, can gain further advantages by using various signals (by various specific waveforms) within the various lighting devices and/or the various parts of the lighting devices. The system is thus enabled to have various information encoded at various locations within the lighting and sensing field. Therefore, in some embodiments, the lighting devices (5) comprise groups of light sources and all the sources of the same group share a light feature, which is not shared by any other light source of a different group. For example, said light feature can be at least one feature among the frequency, the color and the wave shape.

Preferably, the steps implemented by the control unit (2) are performed only when the hatch is opening or closing. In addition, the steps implemented by the control unit (2) may preferably be maintained after the hatch is fully opened or closed and until the doors of the vehicle are locked or a maneuver of the vehicle is started.

Those with skills in the art will understand from the present disclosure that the present invention proposes a method for adaptive management or control of vehicle lighting as a function of the need of visible light sensing for assistance to users. This method involves the use of a control unit (2) having computing resources and connected to sensors (3) to control the vehicle lighting system (1). Such calculation resources are known per se and can be implemented by a computer element. Thus, certain embodiments also relate to a computer element comprising means for implementing the steps of a method according to the invention. Likewise, it is known that such computer means for implementing such a method generally requires a computer program unless analog programming is envisaged. Thus, certain embodiments concern a computer program comprising instructions which, when the program is executed by a control unit (2), cause the control unit to execute the steps of a method according to the invention. Finally, as the invention is intended to be mounted on a vehicle, certain embodiments relate to a vehicle lighting system (1) comprising:
- a plurality of lighting devices (5);
- a plurality of luminous sensors (3);
- a control unit (2) for carrying out the steps of the method according to one of the embodiments described herein.

Finally, the present invention also concerns an automotive vehicle comprising such lighting system (1) according to some of these embodiments.

The present application describes various technical characteristics and advantages with reference to the figures and/or various embodiments. Those skilled in the art will understand that the technical characteristics of a given embodiment can in fact be combined with characteristics of another embodiment unless the opposite is explicitly mentioned or it is obvious that these characteristics are incompatible or that the combination does not provide a solution to at least one of the technical problems mentioned in this application. In addition, the technical characteristics described in a given embodiment can be isolated from the other characteristics of this mode unless the opposite is explicitly mentioned.

Detailed list of references in the figures :
- 1: lighting system
- 2: control unit
- 3: luminous sensor
- 5: lighting (and/or signaling) device

## Claims

1. Method for dynamic control of a vehicle's hatch, by a lighting system (1) comprising: a plurality of lighting devices (5) controlled by a control unit (2) including processing means to provide a plurality of lighting configurations of said system (1) projecting light in a lighting field and, a plurality of luminous sensor (3) configured to acquire a portion of a reflection of said projected light within a sensing field, said control unit (2) being further configured to receive data from the luminous sensors for acquiring data on external environment of the vehicle, the method being **characterized in that** it is implemented by said control unit (2) and comprises, during the opening or closing of the hatch of said vehicle :
- Monitoring activation and speed of pivoting of the hatch of the vehicle,
- Projecting light by at least one first lighting device (5) among license plate light, main stop light, third central light,
- Monitoring opening of the hatch by calculating at least one distance between at least one first sensor and the hatch and/or an obstacle in the pivoting range of the hatch,
and
- controlling the hatch to avoid collision.

2. Method according to claim 1, wherein, when controlling the hatch, the control unit (2) controls speed of motor connected to the hatch to slow and/or stop the opening and/or the closing and optionally controls at least one electronic device for emitting an alert, informing the users of a risk of collision.

3. Method according to any one of claims 1 or 2, wherein, when controlling the hatch, the control unit (2) further controls a second lighting device, in combination with said first sensor or at least a second sensor at a different location, for improving detection of obstacle and monitoring of the opening.

4. Method according to claim 3, wherein the lighting devices (5) comprise groups of light sources and all the sources of the same group share a light feature, which is not shared by any other light source of a different group and wherein the first and second lighting devices pertain to different groups.

5. Method according to claim 4, wherein the light feature is at least one of frequency, color and wave shape.

6. Method according to any of the preceding claims, wherein the light sources are solid-state light sources, preferably light emitting diodes or laser diodes.

7. Method according to any of the preceding claims, in which the steps implemented by the control unit (2) are performed only when the hatch is opening or closing.

8. Method according to any one of the preceding claims, in which the steps implemented by the control unit (2) are maintained after the hatch is fully opened or closed and until the doors of the vehicle are locked or a maneuver of the vehicle is started.

9. Computer element comprising means for implementing the process according to any one of the preceding claims.

10. Computer program comprising instructions which, when the program is executed by a control unit (2), cause the control unit to execute the method according to any one of claims 1 to 10.

11. Lighting system (1) for vehicle comprising:
- a plurality of lighting devices (5);
- a plurality of luminous sensors (3);
- a control unit (2) for carrying out the steps of the method according to any one of claims 1 to 9.

12. Automotive vehicle comprising a lighting system (1) according to the preceding claim.
